# EUROPÄISCHE PATENTSCHRIFT

(11) **EP 1 802 885 B1**
(45) Veröffentlichungstag und Bekanntmachung des Hinweises auf die Patenterteilung: **06.04.2011**
(21) Anmeldenummer: 05796926.3
(22) Anmeldetag: 28.09.2005
(51) Int. Cl.: F16D 65/092, F16D 65/14, F16D 65/38, B60T 13/74

(54) **ANSTEUERVERFAHREN FÜR EINE SELBSTVERSTÄRKENDE BREMSE**
CONTROL METHOD FOR A SELF-ENERGISING BRAKE
PROCEDE D'ACTIONNEMENT POUR UN FREIN A DISQUE AUTO-ASSISTE

(30) Priorität: 13.10.2004 DE 102004050065; 04.04.2005 DE 102005015408; 30.06.2005 DE 102005030618
(43) Veröffentlichungstag der Anmeldung: 04.07.2007
(73) Patentinhaber: KNORR-BREMSE Systeme für Nutzfahrzeuge GmbH, 80809 München (DE)
(72) Erfinder: BAUMGARTNER, Johann, 85368 Moosburg (DE); SEIDENSCHWANG, Matthias, 80637 München (DE); BIEKER, Dieter, 83080 Oberaudorf (DE); GANZHORN, Dirk, 81543 München (DE)
(74) Vertreter: Mattusch, Gundula
(86) Internationale Anmeldenummer: PCT/EP2005/010448
(87) Internationale Veröffentlichungsnummer: WO 2006/042621

(56) Entgegenhaltungen:
- EP-A- 0 153 265
- WO-A-03/071150
- WO-A-03/100282
- DE-A1- 10 151 950
- US-A- 3 285 372
- US-A- 6 008 604

## Beschreibung

Die Erfindung betrifft ein Verfahren zur Ansteuerung einer selbstverstärkenden Bremse.

Selbstverstärkende Bremsen sind in verschiedensten Ausgestaltungen bekannt. So stellen eine klassische Bauart selbstverstärkender Bremsen die Trommelbremsen dar, wo eine Bremsbacke auflaufend angeordnet ist, so dass die Reibungskräfte zwischen Bremsbelag und Trommel die Spannkraft unterstützen.

Bei Scheibenbremsen ging man dagegen in der Vergangenheit davon aus, dass es gerade einen wesentlichen Vorteil dieser Bremsenbauart darstellt, dass bei ausschließlich senkrecht zur umlaufenden Bremsscheibe angreifenden Bremsbelägen, auf die nur eine parallel zur Bremsscheibenachse wirkende Betätigungseinrichtung mit einer derart ausgerichteten Kraft einwirkt, kein selbstverstärkender Effekt auftritt. Dies galt um so mehr bei Scheibenbremsen für schwerere Nutzfahrzeuge, bei denen die Betätigung vorzugsweise hydraulisch oder pneumatisch erfolgt.

Sollen allerdings auch bei schwereren Nutzfahrzeugen Scheibenbremsen mit elektromotorisch betriebenen Betätigungseinrichtungen eingesetzt werden, wird die selbstverstärkende Scheibenbremse zur Option, da sie die Möglichkeit dazu eröffnet, den Elektromotor aufgrund der Selbstverstärkung der Bremse kleiner zu dimensionieren, als dies bei einer nicht selbstverstärkenden Schiebenbremse möglich wäre.

Selbstverstärkende Scheibenbremsen sind an sich in verschiedensten Ausführungsformen bekannt. Die Mehrzahl der beschriebenen Lösungen beschreibt allerdings Wirkprinzipien, welche zwar eine Selbstverstärkung ermöglichen, die aber i.allg. aufgrund mangelnder Praxistauglichkeit sowie aufgrund eines umständlichen konstruktiven Aufbaus nicht zur Realisierung einer serienreifen, wirtschaftlich herstellbaren Scheibenbremse für schwere Nutzfahrzeuge geeignet sind und daher oftmals das Stadium theoretischer Überlegungen nicht überschritten haben.

Der elektromotorische Antrieb wird mit einer Steuerungs- und/oder Regelungseinrichtung gekoppelt, die dazu ausgelegt ist, die Position des Stellgliedes bzw. Bremsbelages zu steuern oder zu regeln. Nach Vorgaben einer übergeordneten Einheit (z.B. ein Steuergerät) wird dabei die Position der Bremsbelageinheit eingestellt.

Diese Steuerungs- und/oder Regelungseinrichtung wird bevorzugt wie folgt betrieben:
Basis des bevorzugten Regelungskonzeptes ist eine Abbremsungs- bzw.
Verzögerungsregelung des Fahrzeuges, wie sie in heutigen EBS geregelten Fahrzeugen mit Druckluft-Bremsanlage üblich ist.

Bei derartigen Bremsanlagen gibt der Fahrer oder ein autonomes Fahrzeugsystem einen Brems- bzw. Abbrems- oder Verzögerungswunsch vor, der in ein Signal "Bremsen" umgesetzt wird, das vom EBS System verarbeitet und in eine entsprechende Ansteuerung der Radbrems - Aktuatoren (Pneumatikzylinder oder Elektromotor) umgesetzt wird, die zu einer entsprechenden Bremsbetätigung führt.

Bei pneumatisch betätigten Scheibenbremsen wird üblicherweise eine reine Drucksteuerung des Betätigungszylinders der jeweiligen Bremse durchgeführt, da der Zusammenhang
Bremsdruck => Zylinderkraft => Spannkraft => Reibkraft
in genügend engen Grenzen genau bzw. ermittelbar und reproduzierbar ist.

Bei selbstverstärkenden, elektromechanisch betätigten Bremsen ist diese genügende Genauigkeit zwischen Aktuator - Stellgröße und Reibkraft in der Regel nicht mehr gegeben.

Als Aktuator-Stellgröße der derartiger elektromechanisch selbstverstärkender Bremsen wird häufig der Motorstrom verwendet. Es ergeben sich jedoch aus den, z.B. auch temperaturabhängigen Motorwirkungsgraden, dem Wirkungsgrad des Untersetzungsgetriebes sowie schließlich dem Wirkungsgrad des Verstärkungsmechanismus in Verbindung mit den Reibwertstreuungen der Bremsbeläge so große Toleranzen der erzielbaren Bremswirkung, dass eine Steuerung der Bremswirkung über den Motorstrom nicht möglich erscheint.

Es wurde bereits vorgeschlagen, unmittelbar die Reibkraft zu erfassen und zu regeln (WO 03/100282 oder später für die an sich bekannte selbstverstärkende Bremse mit einer Keilbetätigung EP 0 953 785 B1).

Bei diesem Verfahren besteht das Problem, eine geeignete Messmethode zur Bestimmung der Reibkraft zu finden. Darüber hinaus ergibt sich die Schwierigkeit, dass die Reibkraft in sehr starkem Maße durch Bremsen- und Radschwingungen beeinflusst wird und somit eine nur schwer beherrschbare Regelgröße darstellt.

Es soll daher eine Regelungsmethode für selbstverstärkende Bremsen gefunden werden, die sich insbesondere auch für die beanspruchten Scheibenbremsen gut eignet und die mit einer Reibkraftregelung verbundenen Probleme vermeidet.

Zusammengefaßt realisiert die Erfindung zur Lösung dieser Aufgabe ein Verfahren zum Ansteuern einer selbstverstärkenden Bremse, bei der eine vom Aktuator aufgebrachte Betätigungskraft mit Hilfe einer zwischen Aktuator und Bremsbelag angeordneten Selbstverstärkungseinrichtung verstärkt wird, wobei der Aktuator mit einer Steuerungs- oder Regelungseinrichtung gekoppelt ist, die dazu ausgelegt ist, den Aktuator anzusteuern um derart die Position der Bremsbelageinheit einzustellen, das sich dadurch auszeichnet, dass bei der Regelung toleranzbedingte Bremskraftunterschiede unter den vom Bremssystem geregelten Radbremsen - dritte Regelgröße genannt - ermittelt und ausgeglichen werden.

### Zunächst sei eine erste Variante erörtert.

### Lösung 1 : Dritte Regelgröße

Die nachfolgend beschriebene Lösung sieht ein Bremssystem vor bei dem zwischen der Fahrzeugregelgröße "Abbremsung oder Verzögerung" und der Aktuatorstellgröße "Strom oder Aktuatorposition" eine dritte Regelgröße eingeführt wird, welche im Wesentlichen dazu bestimmt ist die toleranzbedingten Bremskraftunterschiede unter den vom Bremssystem geregelten Radbremsen auszugleichen.

Diese dritte Regelgröße wird für jedes Fahrzeugrad individuell erfasst und mit den an den anderen Rädern ermittelten Werten verglichen.

Bei unzulässigen Abweichungen von den Vorgaben des EBS-Systems werden diese Vorgaben (Motorstrom oder Aktuatorposition) für die einzelnen Bremsen individuell mit einem Korrekturfaktor überlagert mit dem die bestehenden Bremskraftunterschiede ausgeglichen werden.

Dieser Anpassungsvorgang wird ggf. in kleineren Schritten über mehrere Bremsbetätigungen hinweg durchgeführt.

Als dritte Regelgröße wird vorzugsweise der Radschlupf des jeweiligen Fahrzeugrades ausgewertet.

Bei dieser Methode ist es überraschend nicht erforderlich, einen exakten Zusammenhang zwischen Radschlupf und Bremskraft zu erzeugen sondern es werden lediglich zu einer bestimmtem Sollwertvorgabe des EBS Systems die sich an den einzelnen Rädern ergebenden Radschlupfkenngrößen angeglichen. Insbesondere werden dabei die Radschlupfkenngrößen der Bremsen der einzelnen Achsen möglichst exakt angeglichen. Die Abstimmung der Radschlupfkenngrößen der Achsen untereinander erfolgt in einem zweiten Schritt unter Berücksichtigung der ggf. unterschiedlichen Vorgaben des Bremssystems für die einzelnen Achsen.

Alternativ kann als dritte Regelgröße auch die an der Bremse wirkende Spannkraft ermittelt werden. Die Ermittlung der Spannkraft ist an den kraftaufnehmenden Bauteilen der Bremse, z.B. dem Bremssattel, durch Messung von Verformungswegen oder Bauteilspannungen möglich. Dabei kann der notwendige Sensor im Inneren der Bremse angeordnet und ggf. in eine innerhalb der Bremse angeordnete Steuerelektronik integriert werden.

### Lösung 2 : Steuerung mittels Aktuatorposition oder Motorstrom kombiniert mit Toleranzkompensation

Ein zweiter Lösungsweg basiert auf dem vorhandenen Regelalgorithmus heutiger EBS-Systeme wobei lediglich die Aktuatorstellgröße Druck durch eine andere systemspezifische Stellgröße ersetzt wird. Als systemspezifische Stellgrößen bieten sich Aktuatorposition und Motorstrom in besonderer Weise an.
Bei der Kritik des Standes der Technik wurde bereits die große Toleranzstreuung erwähnt welche die Anwendung dieser Methode erschwert. Es ist deshalb notwendig die in dieser Wirkungskette vorhandenen Toleranzeinflüsse weitgehend auszuschalten.

Dies wird vorzugsweise mit einer oder mehreren der folgenden Maßnahmen bewirkt :
- Vor Betätigung des Bremsaktuators wird das Lüftspiel über die Nachstellvorrichtung überwunden, so dass das Lüftspiel bei Beginn der eigentlichen Bremszustellbewegung durch den Bremsaktuator als Fehlerquelle bereits nicht mehr vorhanden ist.
- Die Einfluss der durch Verschleiß- und Temperaturzustand unterschiedlichen Bremsbelag-Kompression wird durch Korrekturfaktoren auf die Sollwertvorgaben des Bremssystems kompensiert. Hierzu wird für jede Bremse der Verschleißzustand beider Bremsbeläge exakt ermittelt. Ebenso wird durch Auswertung der Energiebilanz der Bremse deren Wärmeinhalt und damit auch die Bremsbelagtemperatur ermittelt. Die Auswertung dieser Energiebilanz kann durch das elektronische Bremssystem oder durch eine Bremsenintegrierte elektronische Steuerung erfolgen.
- Bremsenindividuelle Streuungen des Zusammenhanges Spannkraft - Sattelaufweitung werden durch einen Eichvorgang bei der Bremsenmontage ausgeglichen. Hierzu wird der Bremssattel z.B. bei der Endprüfung am Montageband mit definierten Kräften beaufschlagt und die dabei erfolgende Aufweitung bzw. direkt der hierzu erforderliche Aktuatorstellweg ermittelt. Die definierte Kraftaufbringung erfolgt vorzugsweise so, dass in der Bremszange, z.B. anstelle der Bremsscheibe, Kraftaufnehmer eingesetzt werden und dann der Aktuator zur Erzeugung der vorgegebenen Spannkräfte angesteuert wird. Der so festgestellte Zusammenhang Spannkraft - Aktuatorposition kann nun z.B. in einer bremsenintegrierten Elektronik abgespeichert werden.
- Bei Anwendung des Motorstromes als Aktuatorstellgröße kann die beschriebene Toleranzkompensation in gleicher Weise angewendet werden. Es wird dann beim Eichvorgang der Zusammenhang Spannkraft - Motorstrom ermittelt und wie oben beschrieben abgespeichert.
   Bei diesem Eichvorgang werden auch die Toleranzeinflüsse von Getriebe und Elektromotor zumindest für Raumtemperaturbedingungen eliminiert.
   Der Temperatureinfluss auf den Elektromotor, z.B. auf dessen Dauermagneten, kann wiederum mittels der o.g. Wärmebilanzrechnung ausgeglichen werden.

Die resultierende Normalkraft für eine bestimmte Position der Selbstverstärkungseinrichtung ist abhängig von vielen Faktoren wie
- aktuelles Lüftspiel
- Steifigkeit der Bremse (Sattel) senkrecht zur Reibfläche
- Insbesondere die variable Steifigkeit des Belages, die abhängig ist von
   o Belagsorte
   o Verschleißzustand, also Restdicke
   o Temperatur
   o Vorgeschichte (Auswirkung auf Kompressibilität)
   o Feuchtigkeitsaufnahme
- Während der Bremsung veränderliche Temperatur von Sattel und Scheibe
- Reibwert zwischen Bremsbelag und Bremsscheibe (Auswirkung auf Selbstverstärkungseffekt und damit auf Normal- wie auch auf Reibkraft). Dieser ist seinerseits abhängig u. a. von
   o Temperatur
   o Geschwindigkeit

Nach der Lehre der Erfindung ist eine gezielte Ansteuerung der Rampenposition zur Erreichung einer bestimmten Anpresskraft kaum möglich, wenn der Einfluss der genannten Parameter ganz unberücksichtigt bleibt.

Durch die Erfindung wird es dagegen in einfacher Weise möglich, eine gewünschte Belaganpresskraft durch eine gezielte Wegsteuerung der
Selbstverstärkungseinrichtung bzw. des Bremsbelages bewerkstelligen zu können und so auf einen schwer realisierbaren Abgleich von Soll- zu Istwert der Reibkraft verzichten zu können oder aber eine gezielte Vorsteuerung für eine Bremse mit Soll-/Istwert-Vergleich der Belaganpresskraft oder auch Reibkraft zu ermöglichen.

Erfindungsgemäß wird dies dadurch erreicht, dass Störgrößen, welche die Korrelation zwischen Rampen- bzw. Belagposition und Belaganpresskraft beeinflussen, durch Berücksichtigung relevanter Parameter kompensiert werden.

Dazu wird eine Kennlinie ermittelt, die gemäß einer Position der Selbstverstärkungseinrichtung - beispielsweise eine Rampe - bzw. eines vom Aktuator vorgegeben Stellweges eine entsprechende Anpresskraft definiert.

Diese Kennlinie wird vorzugsweise laufend aktualisiert, um z.B. Einflüsse wie Temperatur und Geschwindigkeit berücksichtigen zu können.

Der Anlegepunkt des Bremsbelages auf der Bremsscheibe wird ermittelt, z.B. mit Hilfe des Stromes eines elektrischen Aktuators oder durch Berechnung aus aktuellem Lüftspiel und Rampengeometrie.

Die Steigung der Kennlinie wird in Abhängigkeit von Rampen- bzw. Belagposition angepasst an:
a) Steifigkeit der Bremse (Sattel) senkrecht zur Reibfläche
   Kann experimentell oder durch Rechnung bestimmt werden und ist nahezu konstant.
b) Insbesondere die variable Steifigkeit des Belages, die abhängig ist von
   o Belagsorte
      Entweder durch Spezifikation in tolerierbarem Rahmen oder durch Eingabe/Auswahl entsprechender Parameter bei Belagwechsel in einem elektronischen Steuergerät.
   o Verschleißzustand, also Restdicke
      Wird kontinuierlich sensiert (Stand der Technik)
   o Temperatur
      Entweder durch Messung oder durch Berechnung, z.B. mittels Energieintegration, Kühlleistung etc.
   o Vorgeschichte (Auswirkung auf Kompressibilität)
      Protokollierung der Bremsbelaghistorie (Alterung), z.B. mittels Energieintegration, max. Temperatur o.ä.. Zusammenhang zwischen Belagsteifigkeit und Alterung kann empirisch ermittelt werden.
c) Während der Bremsung veränderliche Temperatur von Sattel und Scheibe Entweder durch Messung (.z.B. Thermoelemente) oder Berechnung
d) Reibwert zwischen Bremsbelag und Bremsscheibe (Auswirkung auf Selbstverstärkungseffekt und damit auf Normal- wie auch auf Reibkraft). Dieser ist seinerseits abhängig u. a. von
   o Temperatur
   o Geschwindigkeit
Empirische Ermittlung der Abhängigkeit.

Alternativ oder zusätzlich kann die Bremse auch über Ermittlung der zwischen Belag und Scheibe wirkenden Normalkraft geregelt werden. Die Normalkraft kann z.B. über eine Sensierung der Sattelspreizung ermittelt werden. Weicht die tatsächliche von der gewünschten Normalkraft ab, kann diese mittels der beschriebenen Weg-Kraft-Kennlinie angepasst werden.

Die Zuspanneinheit bzw. -rampe kann definiert durch einen Winkel entweder als Druckrampe, Zugrampe oder Zug-Druckrampe ausgeführt sein. Insbesondere im Falle eines Zug-Druckrampe wird als Antrieb vorteilhaft ein selbsthemmendes System gewählt, d.h. eine durch einen ungewöhnlich hohen/niedrigen Reibwert resultierende hohe Kraft in Richtung der Betätigung kann nicht zu einer unkontrollierbaren Verschiebung der Rampe führen.

Die beschriebene Störgrößenkompensation kann auch für direkt betätigte (Betätigungsfläche = Abstützfläche) Systeme verwendet werden.

Zusammengefaßt ergeben sich folgende Vorteile (jeweils für sich und auch in Kombination):
- Einfache Umfangsbetätigung über Kurbel
   - koaxial angeordnete Antriebseinheit
   - vorzugsweise integrierte Steuerelektronik
- Einfache Kombination von Spindel- und Kurbelbetätigung
   Anlegefunktion über Spindeln - Krafthub über Kurbel Anlegen und Anpassungsbremsung über Spindeln - Kurbelbetätigung bei Hochlastbremsungen Parkbremsfunktion über Spindeln
- Zuverlässige und unkomplizierte Parkbremsfunktion
   Vorspannen über Spindeln - selbsttätiges Nachspannen über das Verstärkungssystem ohne Kurbelbetätigung.
   Gegebenenfalls zusätzliches Nachspannen über Kurbelbetätigung Zuschalten eines hochverstärkenden Rampenwinkels
- Nutzung eines gemeinsamen Antriebes
   Schaltbares Verteilgetriebe
   Selbsttätig schaltend (nur Anlegefunktion über Spindel)
   Fremd geschaltet (Park- und Teillastbremsfunktion über Spindel)
- Variable Selbstverstärkung
   Mehrstufig, schaltbar
   Stufenlos, selbsttätig anpassend u/o fremdgesteuert
- Gesteuerte Selbsthemmung der Bremsstempel
   Gesteuerte und im Fehlerfall selbsttätige Umschaltung von Selbsthemmung auf selbsthemmungsfreien Betrieb
   a) Selbsthemmende Spindeln und Zuschalten einer selbsthemmungsfreien Vorstufe (Klapprampe, Kugelrampe etc.)
   b) Selbsthemmungsfreie Spindeln und Zuschalten einer die Selbsthemmung bewirkenden Vorstufe (selbsthemmende Getriebestufe etc.)
- Spielfreier Antrieb
   Maßnahmen zur Spielbeseitigung im Kraftübertragungsweg
   vom Antriebsmotor bis zur Belag-Druckplatte.

Nachfolgend wird die Erfindung unter Bezug auf die Zeichnung anhand von Ausführungsbeispielen näher beschrieben. Es zeigen:
Fig. 1 - 3 jeweils Skizzen, welche nach Art von Schnittansichten den prinzipiellen Aufbau verschiedener Varianten erfindungsgemäßer Scheibenbremsen veranschaulichen;
Fig. 4 eine weitere Skizze zur Veranschaulichung der prinzipiellen Funktion der Scheibenbremsen aus Fig. 1 bis 4;
Fig. 5 eine als Schnittansicht gehaltene Skizze einer weiteren erfindungsgemäßen Scheibenbremse; und
Fig. 6 verschiedene Ansichten eines Teilbereiches eines Druckstempels, in Fig. 6a mit Druckelement zur Anlage an einer Bremsbelageinheit.

Die dargestellte Konzeptvarianten werden mit ihren wesentlichen Merkmalen nachfolgend beschrieben:

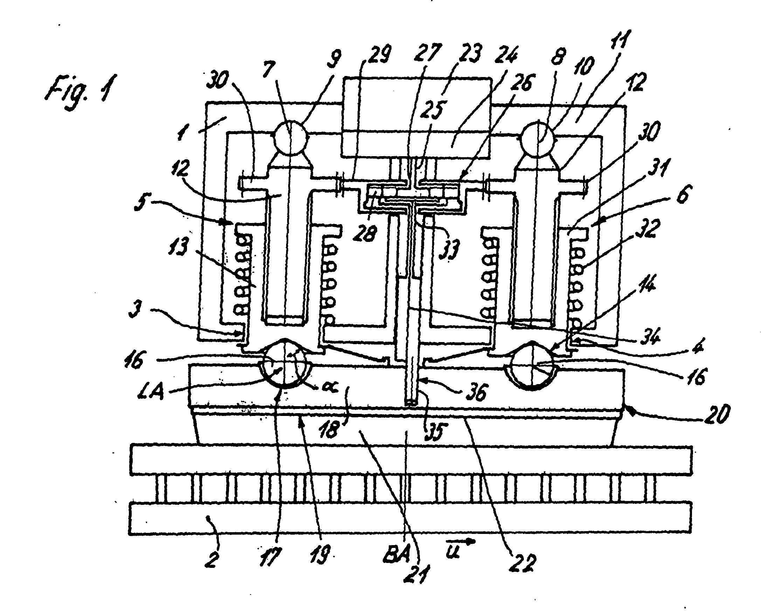

Zunächst sei näher das Funktionsprinzip der Fig. 1 mit einer nicht verstellbaren Rampensteigung in den Druckflächen 5, 6 der Bremsstempel beschrieben.

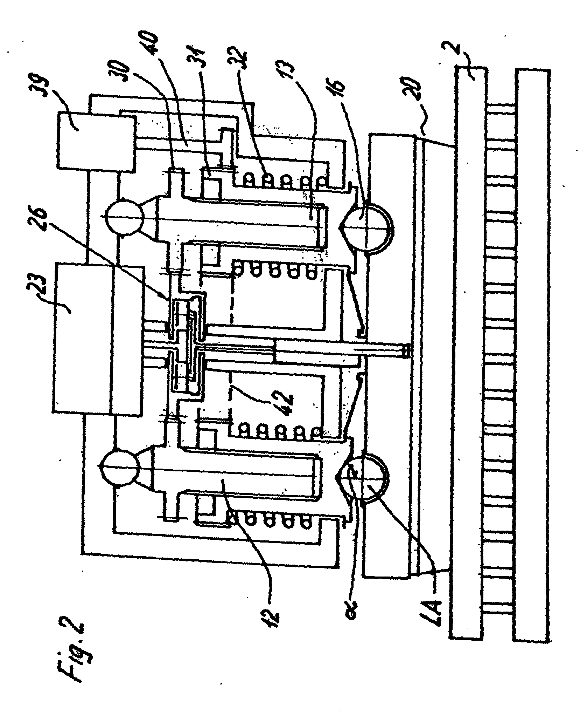

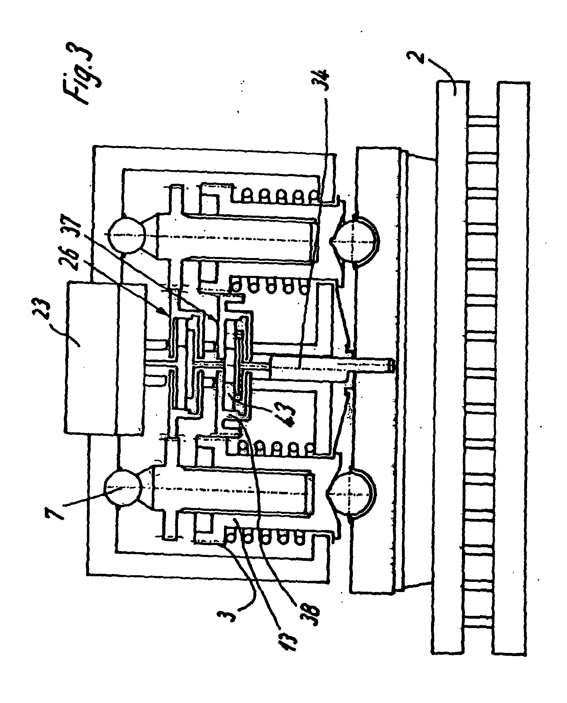

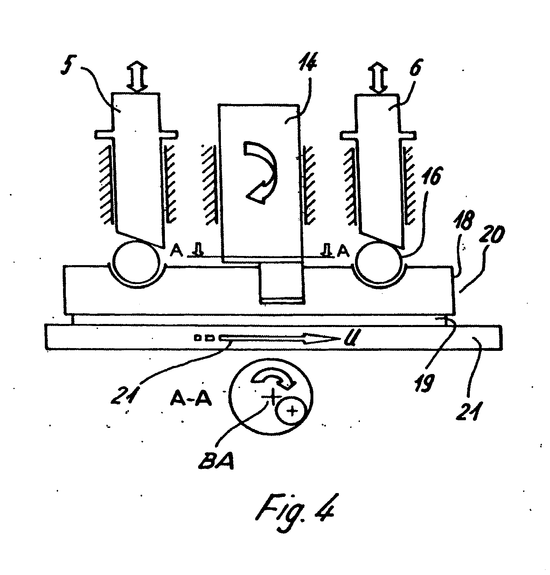

Fig. 3 zeigt sodann eine Variante mit stufenlos verstellbarer und Fig. 2 eine Variante mit gestuft verstellbarer Rampensteigung. Fig. 4 veranschaulicht im Zusammenspiel mit Fig. 1 das Grundfunktionsprinzip.

Bevorzugt bauen die erfindungsgemäßen Scheibenbremsen auf einem Festsattelkonzept auf, bei dem ein ein- oder mehrteiliger Bremssattel 1 (auch Bremsengehäuse genannt) relativ zu einer Bremsscheibe 2 unbeweglich an einer Radachse befestigt ist. Basis der nachfolgend beschriebenen Konzepte ist insofern eine Festsattelbremse mit äußerer elektromechanisch betätigter und elektronisch geregelter Verschleißnachstellung. Das Wirkprinzip und die beschriebenen Merkmale sind prinzipiell auch für andere Bremsenbauarten, wie z.B. Schiebesattel- oder Schwenksattelbremsen, anwendbar. Lediglich der die Bremsbetätigung beinhaltende Sattelkopf der mechanisch/pneumatisch betätigten Basisbremse wird ersetzt durch die elektromechanischer Zuspanneinheit mit Selbstverstärkung. Eine Festsattelbremse mit pneumatisch betätigter Zuspanneinrichtung dieser Art zeigen z.B. die DE 36 10 569 A1, die DE 37 16 202 A1 oder die EP 0 688 404 A1. Eine Festsattelbremse mit elektromotorischer Nachstellung zeigt die WO 02/14 708 A1. Derartige elektromotorische Nachtstelleinrichtungen können bei der vorgeschlagenen Ausführungsbeispielen - wenn gewünscht - jeweils zumindest reaktionsseitig angeordnet werden. Zuspannseitig kann darauf verzichtet werden (z.B. Schiebesattel) oder es werden die Bremsstempel zusätzlich zur Realisierung dieser Funktion genutzt.

In Fig. 1 ist der Bremssattel 1 lediglich in seinem zuspannseitigen Bereich angedeutet. In der Praxis umgreift er vorzugsweise rahmenartig den oberen Umfangsbereich der Bremsscheibe und ist an einem (hier nicht zu erkennenden Achsflansch) befestigt.

Der Bremssattel 1 weist an seiner der Bremsscheibe 2 mit einer Bremsscheibendrehachse zugewandten Seite eine oder mehrere, vorzugsweise zwei Öffnungen 3, 4 und eine korrespondierende Anzahl von Bremsstempeln 5, 6 (hier zwei) auf, die parallel zur Bremsscheibenachse BA ausgerichtet sind.

Nach Fig. 1 bis 4 sind jeweils zwei Bremsstempel 5, 6 parallel zueinander angeordnet.

Die beiden Bremsstempel 5, 6 bzw. Nachstellkolben stützen sich jeweils direkt oder über zwischengeschaltete Elemente; hier Gleitlagerschalen 9, 10; an der bremsscheibenabgewandten Rückwand 11 des Bremssattels ab. Als Lagereinrichtungen werden vorzugsweise Kugeln, 7, 8 mit Gleitlagerschalen 9 eingesetzt.

Die Lagereinrichtungen sind derart ausgelegt, dass sie eine Drehung der Bremsstempel 5, 6 bzw. Nachstellkolben um ihre eigene Längsachse LA erlauben.

Dabei sind jeweils im Bremsstempel 5, 6 und im Bremssattel kugelsegmentartige (kalottenartige) Ausnehmungen ausgebildet, von denen in eine (hier in die im Bremssattel) die Gleitlagerschalen 9, 10 eingesetzt ist, so dass sich die Kugeln 7, 8 relativ zur Gleitlagerschale drehen können.

Alternativ können die Kugeln 7, 8 auch als kugelförmige Ansätze an den zum Bremssattel gewandten Enden der Bremsstempel 5, 6 ausgebildet sein (hier nicht dargestellt), die dann in korrespondierende Ausnehmungen im Bremssattel mit Gleitlagerschalen eingreifen.

Denkbar sind anstelle der Kugeln und Ausnehmungen auch ebene Gleitlager oder ringförmige Lager oder dgl.. (hier nicht dargestellt).

Die Bremsstempel 5, 6 weisen jeweils eine mit einem Außengewinde versehene Spindel 12 auf, auf der eine hülsenartige Mutter 13 mit einem korrespondierenden Innengewinde verdrehbar angeordnet ist. Dieses Gewinde kann je nach Auslegung nicht selbsthemmend oder selbsthemmend sein.

Die Muttern 13 weisen an ihrer von der Bremsscheibe abgewandten Seite einen Flansch 31 auf, wobei zwischen dem Flansch 31 und der Innenwandung des Bremssattels 1 jeweils Druckfedern 32 wirken, welche die Mutter 13 konzentrisch umfassen und auf den Flansch eine vorgegebene Kraft ausüben bzw. den Flansch 31 relativ zur Bremssattelinnenwandung vorspannen.

Alternativ wird die gesamte Mechanik gegen die Druckplatte verspannt.

Nach Fig. 1 bis 4 ist die Mutter 13 jedes Bremsstempels 5, 6 an der zur Bremsscheibe zugewandten Seite angeordnet und die Spindel 12 an der zum Bremssattelinneren gewandten Seite. Eine umgekehrte Anordnung wäre auch denkbar (hier nicht dargestellt).

Durch Verschrauben der Mutter 13 auf der Spindel kann die axiale Länge jedes einzelnen derart ausgebildeten Bremsstempels 5, 6 - beispielsweise zum Ausgleich von Bremsbelagverschleiß und beim Anlegen der Beläge an die Bremsscheibe 2 - verstellt werden.

An ihrer der Bremsscheibe zugewandten Seite, also an ihren Druckflächen, sind die Bremsstempel 5, 6, hier die Muttern 13, jeweils mit einer rampenartigen Ausnehmung oder Kontur 14 versehen, deren tiefste Stelle vorzugsweise im Bereich der Längsachse der Bremsstempel liegt.

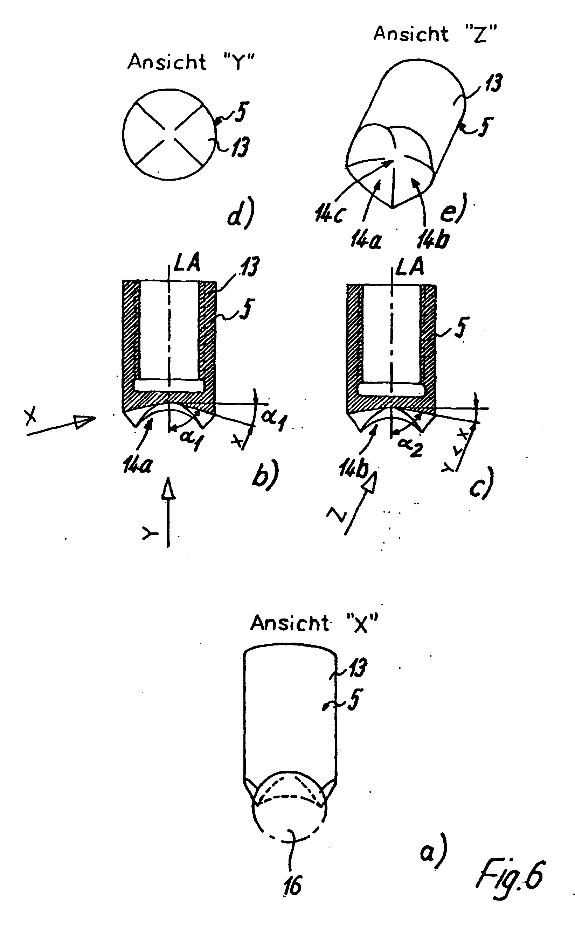

Dies ist besonders gut in Fig. 6 zu erkennen. Nach Fig. 6 sind zwei um 90° zueinander verdrehte Rampen bzw. "Rampen-Laufbahnen" bzw. Konturen 14a, 14b in den Muttern 13 der Bremsstempel 5, 6 vorgesehen, die jeweils einen verschieden großen Öffnungswinkel +α1,- α1; +α2, -α2 zur Längsachse LA aufweisen. Die eine Hälfte jeder "Doppelrampe" +α; -α kann in Vorwärts- und die anderen in Rückwärtsfahrtrichtung genutzt werden.

Durch Drehung der Bremsstempel 5, 6 um 90° - bzw. hier der Muttern 13 - um ihre Längsachse kann entweder die eine oder die andere Kontur 14a, b genutzt werden, wenn die Bremse zugespannt wird, was zu unterschiedlichem Verhalten der Bremse führt (wird nachher noch näher erläutert).

Die Ausnehmungen bzw. Laufbahnen 14 werden kegelförmig mit konstantem Öffnungs- bzw. Rampenwinkel α zur Längsachse LA oder aber z.B. nach einer besonders bevorzugten Variante vorzugsweise nach Art einer veränderlichen Kegelflächenkontur, z.B. Ovalkegelkontur ausgebildet, deren Rampenwinkel α relativ zu den Längsachsen LA der Bremsstempel 5, 6 sich in Umfangsrichtung (relativ zur Längsachse LA der Bremsstempel) verändert (z.B. stufenweise (Fig. 6) oder kontinuierlich).

In die Ausnehmungen 14 greifen jeweils Rollkörper 16 ein, die hier in bevorzugter Ausgestaltung als Kugeln 16 ausgebildet sind.

Die tiefste Stelle 14c (Fig. 6) der Rampen ist jeweils vorteilhaft so ausgestaltet, dass die Rollkörper, insbesondere Kugeln an der tiefsten Stelle verrastet sind und nur gegen eine Mindestrastkraft aus der Vertiefung lösbar sind.

Alternativ wären nach einer alternativen Ausführungsform auch z.B. zylindrische oder auf sonstige Weise geformte Rollkörper (z.B. Tonnen) denkbar, die dann z.B. auf einer rinnenartigen Ausnehmung in den Bremsstempeln abrollen würden. Hiermit wären allerdings - wie nachfolgend deutlich werden wird - nicht alle der Ausführungsformen der Erfindung realisierbar, die in den Fig. 1 bis 3 wiedergegeben sind. Realisierbar wäre aber ein Ausführungsbeispiel nach Art der Fig. 1 mit einer Rinne in den Druckflächen.

Die Rollkörper 16 greifen an ihren von der Bremsscheibe abgewandten Seiten in je nach Ausgestaltung der Rollkörper ausgebildete, hier kalottenförmige Gleitlagerschalen 17, die in Ausnehmungen korrespondierender Formgebung in einer Druckplatte 18 eingesetzt sind, die an der Trägerplatte 19 eines zuspannseitigen Bremsbelages 20 mit Bremsbelagmaterial 21 anliegt, der im Bremssattel 1 parallel zur Bremsscheibendrehachse BA und in Umfangsrichtung U (bzw. Tangential bzw. parallel zur Tangentialen) relativ zur Bremsscheibe 2 beweglich angeordnet ist.

Eine Klammerfeder 22 zwischen Druckplatte 18 und Muttern 13 hält die Druckplatte 18 unter Vorspannung an den Muttern 13. Alternativ ist es auch denkbar, die Druckplatte auf andere Weise, z.B. am Gehäuse (Sattel) zu verspannen).

Zum Antrieb der Bremse dient ein elektrischer Antriebsmotor 23, dem vorzugsweise ein Untersetzungsgetriebe 24 nachgeordnet ist, dessen Abtriebswelle 25 auf ein weiteres Getriebe 26, insbesondere ein Planetengetriebe wirkt, das mittig zwischen den Spindeln angeordnet ist.

Dabei treibt die Abtriebswelle 25 ein Sonnenrad 27 des Planetengetriebes 26 , welches Planetenräder 28 mitnimmt. Die Planetenräder 28 kämmen (hier nicht detailliert dargestellt) mit dem Sonnenrad 27 und einem innen- und außenverzahnten Ring 29. Je nach Schaltzustand (Schaltbarkeit hier nicht dargestellt) setzen sie entweder den Planetenstern 33 oder den Ring 29 in Drehung. Der Ring 29 kämmt mit seiner Außenverzahnung mit Zahnrädern 30, die auf die Spindeln 12 aufgesetzt oder an diese angeformt sind.

Zum selbsttätigen Umschalten des Antriebs (z.B. ein Elektromotors) kann ein federbelasteter Kugelrastmechanismus vorgesehen sein (hier nicht dargestellt). Der Umschaltvorgang kann auch auf andere Weise realisiert werden (z.B. elektromagnetisch).

In axialer Verlängerung des Planetensterns 33 ist eine hier zylindrisch ausgebildete und parallel zur Bremsscheibenachse angeordnete Kurbel 34 vorgesehen, die an ihrer zur Bremsscheibe 2 gewandten Seite mit einem außermittig (exzentrisch) ausgebildeten, ebenfalls parallel zur Bremsscheibenachse BA parallel ausgerichteten Kurbelzapfen 35 in eine korrespondierende Öffnung 36 in einer Bremsbelageinheit eingreift, wobei die Öffnung 36 die z.B. einen zum Querschnitt des Kurbelzapfens 35 korrespondierenden Querschnitt aufweist oder aber z.B. kulissen- , insbesondere langlochartig ausgebildet ist (hier z.B. senkrecht zur Bildebene).

Im Ausführungsbeispiel der Fig. 1 besteht die Betätigungseinrichtung bzw. Zuspanneinheit aus den zwei, zum Zwecke der Verschleißnachstellung längenveränderlichen Nachstellkolben bzw. Bremsstempeln 5, 6, welche in ihrer der Bremsscheibe 2 zugewandten Druckfläche die Ausnehmungen 14 nach Art von Rampenkonturen aufweisen, an denen die Rollkörper 16 ablaufen, welche die von der Bremse erzeugte Zuspannkraft auf die Bremsbelageinheit bzw. auf die auf den Bremsbelag aufliegende Druckplatte übertragen.

In der Druckfläche der Bremsbelageinheit bzw. der Druckplatte 18 sind die Rollkörper 16 über ein entgegengesetzt gestaltetes Rampenprofil (hier nicht dargestellt) oder (bevorzugt, da die Rollkörper besonders sicher geführt sind; hier dargestellt) in dem Gleitlagerbett (Gleitlagerschalen 17) aufgenommen.

Die Bremsbelageinheit, hier bestehend aus der ein- oder mehrteiligen Kombination von Bremsbelag 20 und Druckplatte 18, wird federnd so gegen die Bremsstempel und Nachstellkolben 5, 6 gedrückt, dass die dazwischen angeordneten Rollkörper 16 zwischen der Bremsbelageinheit und den Bremsstempel elastisch eingespannt sind.

Die Betätigung der Bremse erfolgt nach einem Anlegevorgang des Bremsbelages 20 an die Bremsscheibe durch ein Verschieben der Druckplatte nebst Bremsbelag 20 parallel zur Reibfläche der Bremsscheibe in Drehrichtung bzw. Umfangsrichtung derselben.

Diese Verschiebung wird vorzugsweise durch den Kurbeltrieb 35, 36 bewirkt, der mit einem Abtriebs- und hier Kurbelzapfen 35 etwa mittig an der Druckplatte 18 der Bremsbelageinheit 18, 20 angreift und parallel zur Rotationsachse der Bremsscheibe im Zuspanngehäuse - Bremssattel - 1 gelagert wird.

Die Betätigung des Kurbeltriebes erfolgt über den elektrischen Antrieb, z.B. den Elektromotor 23 mit nachgeschaltetem Getriebe 24.

Fig. 1 zeichnet sich durch einen konstanten Rampenwinkel α aus. Damit wird ein besonders einfacher konstruktiver Aufbau erreicht, der sich durch einen robusten Aufbau, eine gute Funktionssicherheit und niedrige Herstellkosten auszeichnet. Insbesondere kann ein Elektromotor 23 erstaunlich geringer Ausgangsleistung eingesetzt werden. Dabei bieten sich die Kugeln 16 als kostengünstige Rollkörper an, die sich quasi selbst in der Rampenfläche ausrichten. Zur Erhöhung der Tragfähigkeit können die Kugeln auch in angepassten Laufrillen ablaufen.

Eine Variante mit Rollen als Rollkörpern 16 würde dagegen eine besonders geringe Hysterese aufweisen (hier nicht dargestellt).

Fig. 2 unterscheidet sich von der Variante der Fig. 1 zunächst dadurch, dass der Rampenwinkel der Ausnehmungen 14 in Umfangsrichtung um die Längsachse der Nachstellmuttern bzw. Bremskolben 5, 6 nicht konstant ist sondern veränderlich, so dass je nach Drehstellung der Muttern 13 ein verschieden steiler Rampenwinkel α vorliegt. Hierzu können für die verschiedenen Drehstellungen Kugellaufrillen mit unterschiedlicher Steigung angeordnet sein.

Damit kann die Zuspanncharakteristik auf einfache Weise verändert werden, indem die Muttern 13 verdreht werden, beispielsweise über einen separaten Verstellaktuator 39, vorzugsweise elektromechanischer Bauart (z.B. ein weiterer, kleinerer Elektromotor), der über eine Abtriebswelle 40 mit Zahnrad 41 die Mutter(n) 13 verdreht, beispielsweise, indem er mit dem Abtriebsrad 41 eine der Muttern 13 z.B. an einer Außenverzahnung ihres Flansches antreibt und die andere Mutter 13 über einem Riementrieb 42 mitgenommen wird, der beide Muttern 13 umschlingt.

Derart kann auch im Grenzbereich des Reibwertes erzielbare Selbstverstärkungsgrad von Fig. 1 zu Fig. 2 erhöht werden. Das Umschalten kann allerdings nur im gelösten Zustand erfolgend, da sich die Muttern 13 während der Zuspannungen der Bremse nicht verdrehen können.

Nach Fig. 3 verändert sich der Rampenwinkel kontinuierlich tangential um die Längsachse LA der Bremsstempel 5, 6. Dies wird für eine selbsttätige Winkelanpassung genutzt.

Hierzu ist ein zweites axial zum ersten Planetengetriebe 26 versetztes weiteres Planetengetriebe 37 einerseits zwischen die Kurbel 34 und das erste Planetengetriebe 26 geschaltet und wiederum mittig zwischen den Bremsstempel angeordnet, das einen von den Planetenrädern 43 getriebenen Abtriebsring 38 aufweist, der die außenverzahnten Muttern 13 mitnimmt, wohingegen der Planetenstern 44 dieses Planetengetriebes wiederum die Kurbel antreibt bzw. um ihre Längsachse dreht.

Hiermit ist folgender Betrieb beim Bremsenzuspannen möglich:

Das Bremsenzuspannen zergliedert sich in die Phasen
1. Überwindung des Lüftspiels,
2. Bremskraftaufbau,
3. Lösen der Bremse und
4. Lüftspieleinstellung.

### Phase 1 Überwindung des Lüftspiels

Vor einer Bremsung ist die Ausgangssituation wie folgt.

Zunächst befindet sich die Kurbel 34 in einer Nullposition (Fig. 1), in der sie zum Beispiel mittels einer federbelasteter Kugelraste gehalten ist (hier nicht dargestellt).

Die Nachstellmuttern 3 sind in dieser Situation mittels der Druckfedern 32 mit einem Reib- bzw. Haltemoment beaufschlagt, das stets größer ist als das Spindelreibmoment. Zunächst verdreht der Antriebsmotor 23 in zustellender Drehrichtung die Spindeln 12. Der Planetenstern 33 ist dabei im Getriebe 26 durch die verrastete Kurbel blockiert. Das Außenrad bzw. der innen- und Außenverzahnte Ring 29 verdreht die Nachstellspindeln 12 nunmehr so lange in zustellender Richtung, bis der Bremsbelag 21 auf der Bremsscheibe 2 zur Anlage kommt.

Die Nachstellmuttern 13 sind dabei durch ein ausreichend hohes Haltemoment am Verdrehen gesichert.

Durch die sich aufbauende Reaktionskraft gehen sodann die Nachstellspindeln bzw. Bremsstempel 5, 6 an der vorzugsweise - aber nicht zwingend - beweglichen Bremsscheibe 2 (axial beweglich bei einem Festsattel), die am reaktionsseitigen Belag (hier nicht dargestellt) zur Anlage kommt, auf Block.

### Phase 2 Bremskraftaufbau

Als Folge der blockierten Nachstellspindeln 12 steigt das Antriebsmoment auf die Kurbel 34 nunmehr so stark an, dass diese aus der Rastposition gelöst werden.

Die Kurbel 31 verschiebt nunmehr den Bremsbelag in der Drehrichtung zur Bremsscheibe 2, bis die von der Steuerung vorgegebene Position erreicht ist (Fig. 4).

Dabei verhält sich die Bewegungskomponente des Bremsbelages in Umfangsrichtung - parallel zur Bremsscheibenreibfläche - bzw. bzw. tangential bzw. parallel zur Tangentialen U des Kurbelzapfens nichtlinear, denn auf der Kreisbahn des Kurbelzapfens wird zunächst in Umfangsrichtung pro Zeiteinheit ein größerer Weg zurückgelegt als mit fortschreitender Bewegung des Kurbelzapfens 35 auf seiner Kreisbahn. Das Getriebe mit dem Kurbeltrieb ist also so ausgelegt, dass die Winkelbewegung am Elektromotor und am Abtriebszapfen in Umfangsrichtung nicht in eine lineare Bewegung des Bremsbelages sondern in eine verzögerte Bewegung umgesetzt wird.

Nunmehr sind drei Fälle zu unterscheiden.

### Fall 1

Der aktuelle Bremsbelagreibwert entspricht genügend genau dem Tangens des Rampenneigungswinkels in den Ausnehmungen 14 bzw. in den Druckflächen der Nachstellmuttern 13.

Die vorgegebene Position wird in diesem Fall mit einem nur geringen Verstellkraftaufwand erreicht.

### Fall 2

Der aktuelle Bremsbelagreibbeiwert ist erheblich größer als der Tangens des RampenNeigungswinkels in den Ausnehmungen 14 bzw. Druckflächen der Nachstellmuttern 13.

Durch die zu große Selbstverstärkung wird der Bremsbelag 20 stärker und weiter durch die Bremsscheibendrehbewegung mitgenommen als dies der vorgegebenen Position entspricht.

Auf die Kurbel 34 wird vom Bremsbelag eine Drehkraft in Bewegungsrichtung der Bremsscheibe 2 ausgeübt.

Da der elektrische Antriebsmotor 23 das Sonnenrad 27 des Planetengetriebes 26 und des zweiten Planetengetriebes 37 in Sollposition hält, bewirkt die weitere Drehung der Kurbel 34 und damit des Planetensterns 44 des zweiten Getriebes 37 eine Drehung des Außenrades bzw. innen- und außenverzahnten Außenringes 38 des zweiten Getriebes 37 und damit auch der beiden Nachstellmuttern 13.

Das Haltemoment der beiden Nachstellmuttern 13 wird dabei überwunden.

Durch die Drehung der Nachstellmuttern 13 wird der wirksame Rampen-Neigungswinkel α solange in Richtung abnehmender Selbstverstärkung verändert, bis die wirksame Selbstverstärkung genügend genau an den aktuellen Bremsbelag-Reibbeiwert angepasst ist.

### Fall 3

Fall der aktuelle Bremsbelag-Reibwert erheblich geringer ist als der Tangens des Rampen-Neigungswinkel α in den Ausnehmungen 14 an den Druckflächen des Nachstellmuttern 13, wird der Bremsbelag durch die geringe Selbstverstärkung nicht genügend mitgenommen. An der Kurbel 34 wird damit ein relativ hohes Antriebsmoment erforderlich, um den Bremsbelag 20 zu bewegen.

Infolge des am Hohlrad des Getriebes 24 wirksam werdenden Reaktionsdrehmomentes werden die Nachstellspindeln 5, 6 solange in Richtung einer Erhöhung des Selbstverstärkungsprozesses verdreht, bis der Tangens des wirksamen RampenNeigungswinkels α wieder genügend genau mit dem Bremsbelag-Reibbeiwert in Übereinstimmung gebracht ist.

### Phase 3 Lösen der Bremse

Zum Lösen der Bremse wird die Kurbel 34 und damit der Bremsbelag 20 durch den elektrischen Antriebsmotor in die Rastposition zurückgeführt.

Der dafür notwendige Kraftbedarf an der Kurbel ist gering, da die Selbstverstärkung im vorherigen Bremsvorgang angepasst wurde.

Beim Einrasten der Kurbel 34 in die Rastposition entsteht ein Drehmomentsprung.

Durch Auswertung der Betriebsdaten des el. Antriebsmotors (z.B. Drehzahl, Stromaufnahme) wird das Erreichen der Rastposition erkannt.

### Phase 4 - Einstellen des Lüftspiels und dessen Kontrolle

Da nunmehr die Kurbel 34 kraftschlüssig verrastet ist, wird bei weiterer Rückwärts-Drehbewegung des elektrischen Antriebsmotors 23 das Getriebe 26 wieder aktiviert, über welches nunmehr die Nachstellspindeln 12 zum Lösen der Bremse und zum Erzeugen des Lüftspiels um einen definierten Betrag zurückgedreht werden.

Durch das Anlegen der Bremsbeläge 20 an die Bremsscheibe 2 in der ersten Phase ist eine Kontrolle des Lüftspiels und durch definiertes Zurückfahren aus dieser Position die Lüftspieleinstellung realisiert.

Die Verschleißwerterfassung wird durch eine Auswertung des Positionssignals des elektrischen Antriebsmotors nach Lüftspieleinstellungen ermöglicht.

Nachfolgend wird kurz die gegebene Möglichkeit zur Bremsung bei einer Rückwärtsfahrt erläutert.

### Bremsungen bei Rückwärtsfahrt:

Zwischen einer Vorwärts- und einer Rückwärtsfahrt wird durch geeignete Maßnahmen, z.B. eine entsprechende Auswertung des Drehsignals z.B. des Rad-Drehzahlfühlers (beispielsweise ein ABS-Sensor) an einem hier nicht dargestellten Steuergerät an/in der Bremse oder an einem übergeordneten Steuergerät des Bremssystems unterschieden, das mit dem Elektromotor verbunden ist und/oder diesen ansteuert.

Über die Bremsenansteuerung wird nach Abschluss der Phase 1 die Kurbel 34 in der Drehrichtung angesteuert, welche der Bremsscheibendrehrichtung entspricht. Nachfolgend sei die Erfindung nochmals aus anderer Richtung betrachtet.

Zunächst sei das Grundprinzip der Fig. 1 mit nicht verstellbarer Rampensteigung nochmals näher erörtert. Zur Realisierung dieser Ausführungsform ist zunächst die Schaffung einer Ausnehmung 14 mit einer Rampenform in den Bremsstempeln 5, 6 notwendig.

Korrespondierend wird eine Gegenrampe in Belagdruckplatte 18 ausgebildet oder - besser - der Rollkörper 16 wird in der in der Belagdruckplatte 18 drehbar gelagert oder es wird eine Rampe in der Belagdruckplatte 18 ausgebildet und der Rollkörper im Bremsstempel gelagert (hier nicht dargestellt).

Damit die Rollkörper 16 an den Ausnehmungen der Muttern 13 der Bremsstempel 5, 6 hochlaufen und damit den Bremsbelag 20 gegen die Bremsscheibe verschieben, ist es notwendig, eine Verschiebung der Belagdruckplatte mit dem Bremsbelag in Umfangsrichtung, vorzugsweise durch ein koaxial zur Bremsscheibenlängsachse und parallel zu dieser angeordnetes Verstellelement (hier eine Kurbel 34) zu erreichen. Die Muttern 13 drehen sich vorzugsweise während des eigentlichen Bremsvorganges nicht. Ein doppelsinniges Rampenprofil (in- und gegen die Umfangsrichtung U) im Bremsstempel 5, 6 ermöglicht dabei eine Selbstverstärkungswirkung in beiden Fahrtrichtungen.

Vorzugsweise wird der Kurbeltrieb 14 durch den Elektromotor 23 mit dem nachgeschaltetem Getriebe 24, 26 angetrieben.

Denkbar ist es, einen separaten Antrieb für die Bremsstempel vorzusehen oder aber Nachstell- und Kurbelantrieb zu kombinieren (Fig. 1 und Fig. 2). Letzteres hat den Vorteil, dass nur ein einziger Antriebsmotor für beide Funktionen benötigt wird.

Denkbar ist es dabei auch, eine Lüftspielüberwindung durch den separaten Nachstellantrieb vorzunehmen (Phase 1 der Funktionsbeschreibung).

Ebenfalls denkbar ist eine Lüftspielüberwindung durch den Kurbelantrieb mittels besonders "steiler Rampe" bei Verschiebungsbeginn.

Das doppelsinnige Rampenprofil (Ausnehmung 14) in den Nachstellkolben 5, 6 ermöglicht dabei eine Selbstverstärkungswirkung in beiden Fahrtrichtungen. Es ist eine Rad-Drehrichtungsabhängige Steuerung der Belagverschiebung realisierbar.

Nach Fig. 3 wird die Ausnehmung 13 bzw. Rampe im Bremsstempel als Kegelstumpfähnlicher Hohlkörper ausgebildet. Der Rollkörper wird wiederum in der Druckplatte 18 gelagert. Damit ist eine Anpassung der Rampensteigung an den Belagreibwert durch Verdrehen der Bremsstempel 5, 6 möglich. Das Verdrehen der Bremsstempel 5, 6 erfolgt durch einen separaten Antrieb 39 oder selbsttätig über ein verzweigendes Getriebe 26, welches die vom Antriebsmotor 23 erzeugte Drehbewegung in Abtriebsdrehbewegungen sowohl auf die Kurbel 34 als auch auf die Verdreheinrichtung 12 der Bremsstempel 5, 6 übertragen kann.

Das verzweigende Getriebe 26 ist vorzugsweise ein Planeten getriebe. Eine am Kurbelzapfen 35 wirksam werdende Verschiebekraft (Verschieben der Bremsbelageinheit durch die Kurbel 34 bei zu geringer Selbstverstärkung oder Ziehen der Kurbel 34 durch die Bremsbelageinheit bei zu hoher Selbstverstärkung) ruft im verzweigenden Getriebe 26 Reaktionsmomente hervor, welche bestrebt sind, an der Eingangswelle u/o an den Bremsstempel 5, 6 Drehbewegungen hervorzurufen. Wird nun an der Eingangswelle eine genügend hohe Haltekraft aufgebracht (z.B. durch den Antriebsmotor der über seine elektronische Steuerung die Position der Eingangswelle hält) so erfolgt eine Drehung an den Bremsstempeln 5, 6.

Bei geeigneter Zuordnung der Drehrichtung der Nachstellkolben 5, 6 zur Richtung der Kraftwirkung auf den Kurbelzapfen wird die Rampensteigung bei zu großer Selbstverstärkung (Belageinheit zieht am Kurbelzapfen) zu steileren Rampenwinkeln verdreht und bei zu geringer Seibstverstärkung (Kurbelzapfen schiebt die Belageinheit) zu flacheren Rampenwinkeln, d.h. im Sinne einer Vergrößerung der Selbstverstärkung verstellt.

Bei einer Version mit gestuft verstellbarer Rampensteigung sind mindestens zwei unter einem Winkel angeordnete Rampenbahnen unterschiedlicher Steigung vorgesehen. Dabei sind die Rollkörper wiederum in der Belagdruckplatte 18 gleitgelagert.

Eine Anpassung der Rampensteigung an den Belagreibwert erfolgt durch ein Umschalten des Bremsstempels 5, 6auf die besser angepasste Rampensteigung nach einem vorherigen Bremsvorgang, bei dem die Notwendigkeit des Umschaltens auftrat.

Das Verdrehen des Bremsstempels 5, 6 erfolgt durch einen separaten Antrieb oder selbsttätig, z.B. ähnlich wie vorstehend beschrieben.

Der Umschaltvorgang wird erst nach Beendigung der Bremsung ausgelöst, wobei die über das Getriebe auf die Bremsstempel wirkende Verstell-Drehbewegung in einem Übertragungselement elastisch eingespeichert und erst bei Lösen der Bremse aufgrund der dann wieder abnehmenden Drehbehinderung des Bremsstempels ausgeführt wird.

Die Drehbehinderung kann durch infolge der Bremskraft auf die Spindel wirkende Reibkräfte erzeugt werden oder infolge von Haltekräften die durch den elektrischen Antriebsmotor oder eine geschaltete Kupplung, z.B. eine elektromagnetische Kupplung, auf den Bremsstempel selbst oder ein Element der Überragungseinrichtung ausgeübt werden oder vorzugsweise durch die Kugeln bzw. Rollkörper, welche bei Bremsvorgängen in einer Rampenbahn außerhalb der Mitte des Bremsstempels befindlich sind und mittels der von den Bremsstempel übertragenen Bremskraft, der formschlüssigen Aufnahme in der Rampenbahn (Laufrille) sowie der exzentrisch zur Bremsstempelmitte befindlichen Position ein Haltemoment erzeugt.

Die Ausbildung der Laufrillen der Rampenbahnen erfolgt zweckmäßig in der Form, dass im Bereich kleiner Zuspannkräfte, d.h. geringer Exzentrizität der Kugel bzw. des Rollkörpers, die Rillentiefe gering ist und zum äußeren Durchmesser des Bremsstempels hin eine große Rillentiefe zur Erzielung hoher Tragfähigkeit realisiert wird.

Bei dieser Lösung besteht die Möglichkeit, dass im Bereich geringer Bremskräfte noch ein direktes Umschalten während des Bremsvorganges möglich ist. Erst bei Vorliegen höherer Bremskräfte wird die Kugel bzw. der Rollkörper in der Rampen-Laufrille eine Position einnehmen bei der ein Umschalten während der Bremsung nicht mehr möglich ist.

Vorzugsweise wird zum Antrieb der Bremsbelageinheit ein Kurbeltrieb eingesetzt. Alternativ zu einem Kurbeltrieb sind auch andere Zuspannelemente wie eine Exzenteranordnung u.dgl. denkbar, wenn diese zu einer nichtlinearen Bewegung der Bremsbelageinheit in Umfangsrichtung führen.

Die Steuerung der elektromechanischen Bremse erfolgt jeweils mittels einer Rechnereinheit an der Bremse, die ggf. vernetzt sind oder zum Beispiel mittels einem übergeordneten Rechner am Fahrzeug für eine oder mehrere Bremsen.

Es ist alternativ auch ein linearer Antrieb bei weitgehend analoger Anordnung denkbar. Anstelle des Kurbelzapfens wird dabei auf die Antriebswelle ein Zahnradsegment aufgesetzt, welches in eine Zahnstange auf dem Belagrücken eingreift (hier nicht dargestellt).

Bevorzugt wird jedoch der nicht lineare Antrieb eingesetzt.

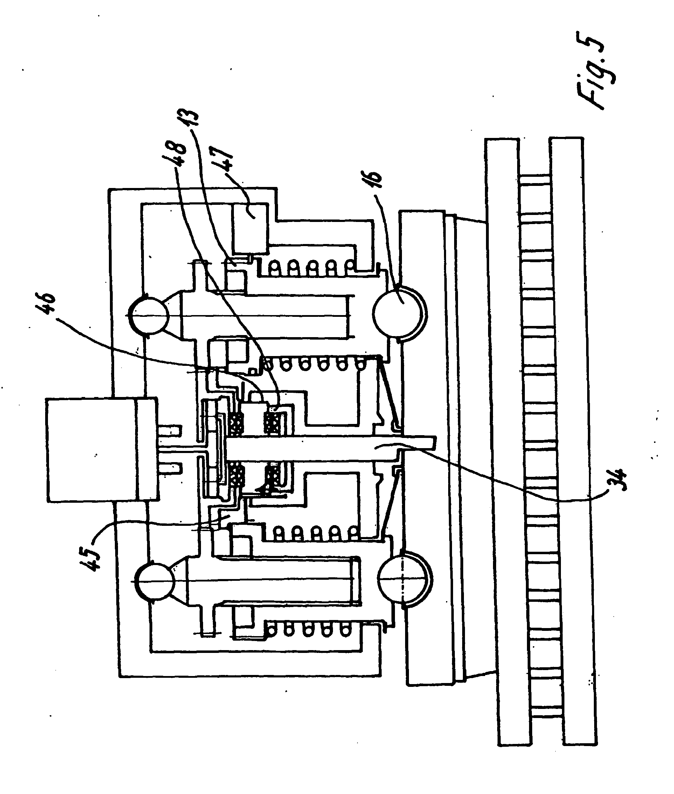

Fig. 5 zeigt eine weitere Variante der erfindungsgemäßen selbstverstärkenden Scheibenbremse, die weitegehend dem Ausführungsbeispiel aus Fig. 1 entspricht.

Wie im Ausführungsbeispiel der Fig. 1 besteht die Betätigungseinrichtung bzw. Zuspanneinheit aus den zwei, zum Zwecke der Verschleißnachstellung längenveränderlichen Nachstellkolben bzw. Bremsstempeln 5, 6, welche in ihrer der Bremsscheibe 2 zugewandten Druckfläche die Ausnehmungen 14 nach Art von Rampenkonturen aufweisen, an denen die Rollkörper 16 ablaufen, welche die von der Bremse erzeugte Zuspannkraft auf die Bremsbelageinheit bzw. auf die auf den Bremsbelag aufliegende Druckplatte übertragen.

Zusätzlich ist eine schaltbare Kupplung, hier z.B. eine Magnetkupplung 46, insbesondere Kupplung mit bistabil wirkendem Stellmagneten vorgesehen, welche dazu ausgelegt ist, z.B. an einer axial beweglichen Radialverzahnung 48 die Kurbel 34 in und aus dem Antriebsstrang zu schalten. Derart kann z.B. gezielt für Parkbremsungen zunächst oder sogar ausschließlich allein über die Bremsstempel 5, 6 eingebremst werden oder aber es können z.B. kleinere Anpassungsbremsungen allein über Verdrehen der Bremsstempel 5, 6 bzw. das Verändern der axialen Länge der Bremsstempel erfolgen. Wird dagegen eine "normale" Betriebsbremsung eingeleitet, wird die Kupplung umgeschaltet und dass Einbremsen erfolgt über die Kurbel 34.

Ergänzend ist nach Fig. 5 eine Umschalteinrichtung 47 zum Verdrehen der Bremsstempel, hier der Muttern von einer Laufbahn 14 a zur anderen Laufbahn 14b, vorgesehen. Diese Umschalteinrichtung 47 kann als separater Elektromotor ausgelegt sein oder aber als Umschaltmagnet oder dgl., der z.B. über eine Zahnstange oder dgl. eine der Muttern 13 um 90° dreht, wobei die andere der Muttern 13 z.B. über einen Zahnkranz 45 mitgenommen wird. Auf eine derartige Einrichtung kann

Anzumerken ist noch, dass sich die vorliegende Bremsenkonstruktionen auch hinsichtlich ihres Regelverhaltens besonders vorteilhaft einzustufen sind.

Wird beispielsweise eine Normalkraftregelung durchgeführt, die nach dem Stand der Technik als alleinige Regelung nicht für einsetzbar gehalten wird, wirkt es sich vorteilhaft aus, das beispielsweise über die Abstützung der Bremsstempel am Bremssattel diese Normalkraft sehr genau ermittelbar ist (parallele Kraft zur Längsachse der Bremsstempel, indem beispielsweise entsprechende Sensoren an den Bremsstempeln und/oder angrenzenden Elementen angeordnet werden.

### Bezugszeichen

- Bremssattel: 1
- Bremsscheibe: 2
- Öffnungen: 3, 4
- Bremsstempel: 5, 6
- Lagerkugeln: 7, 8
- Gleitlagerschalen: 9, 10
- Rückwand: 11
- Spindel: 12
- Mutter: 13
- rampenartige Ausnehmung: 14
- Rollkörper: 16
- Gleitlagerschalen: 17
- Ausnehmungen: 15
- Druckplatte: 18
- Trägerplatte: 19
- Bremsbelag: 20
- Bremsbelagmaterial: 21
- Klammerfeder: 22
- Antriebsmotor: 23
- Untersetzungsgetriebe: 24
- Abtriebswelle: 25
- Getriebe: 26
- Sonnenrad: 27
- Planetenräder: 28
- Ring: 29
- Zahnräder: 30
- Flansch: 31
- Druckfedern: 32
- Planetenstern: 33
- Kurbel: 34
- Kurbelzapfen: 35
- Öffnung: 36
- Getriebe: 37
- Ring: 38
- Verstellaktuator: 39
- Antriebswelle: 40
- Zahnrad: 41
- Riementrieb: 42
- Planetenräder: 43
- Planetenstern: 44
- Zahnkranz: 45
- Magnetkupplung: 46
- Umschalteinrichtung: 47
- Rampenwinkel: α
- Längsachse: LA
- Unfangsrichtung: U
- Bremsscheibenachse: BA

## Patentansprüche

1. Verfahren zum Ansteuern einer selbstverstärkenden Bremse mit elektrischem Aktuator, bei der eine vom Aktuator aufgebrachte Betätigungskraft mit Hilfe einer zwischen Aktuator und Bremsbelag angeordneten Selbstverstärkungseinrichtung verstärkt wird, wobei der Aktuator mit einer Steuerungs- oder Regelungseinrichtung gekoppelt ist, die dazu ausgelegt ist, den Aktuator anzusteuern um derart die Position der Bremsbelageinheit einzustellen, **dadurch gekennzeichnet, dass** die Regelung zumindest auf der Basis folgender Parameter durchgeführt wird:
- Fahrzeugregelgröße "Abbremsung oder Verzögerung",
- Aktuatorstellgröße "Strom oder Aktuatorposition ", und
- eine - dritte - Regelgröße, die dazu bestimmt ist, toleranzbedingte Bremskraftunterschiede unter den vom Bremssystem geregelten Radbremsen auszugleichen, wobei die dritte Regelgröße für jedes Fahrzeugrad individuell erfasst und mit den an den anderen Rädern ermittelten Werten verglichen wird.

2. Verfahren nach Anspruch 1, **dadurch gekennzeichnet, dass** bei unzulässigen Abweichungen von den Vorgaben des EBS-Systems die Vorgaben (Motorstrom oder Aktuatorposition) für die einzelnen Bremsen individuell mit einem Korrekturfaktor überlagert werden, mit dem die bestehenden Bremskraftunterschiede ausgeglichen werden.

3. Verfahren nach Anspruch 1 oder 2, **dadurch gekennzeichnet, dass** der Ausgleichsvorgang in kleineren Schritten über mehrere Bremsbetätigungen hinweg durchgeführt wird.

4. Verfahren nach einem der vorstehenden Ansprüche, **dadurch gekennzeichnet, dass** als dritte Regelgröße der Radschlupf des jeweiligen Fahrzeugrades verwendet bzw. ausgewertet wird.

5. Verfahren nach Anspruch 4, **dadurch gekennzeichnet, dass** zu einer bestimmtem Sollwertvorgabe des EBS Systems die sich an den einzelnen Rädern ergebenden Radschlupfkenngrößen angeglichen werden.

6. Verfahren nach Anspruch 4 oder 5, **dadurch gekennzeichnet, dass** die Radschlupfkenngrößen der Bremsen der einzelnen Achsen möglichst exakt angeglichen werden.

7. Verfahren nach einem der vorstehenden Ansprüche, **dadurch gekennzeichnet, dass** als dritte Regelgröße auch die an der Bremse wirkende Spannkraft ermittelt wird.

8. Verfahren nach Anspruch 7, **dadurch gekennzeichnet, dass** die Ermittlung der Spannkraft an den kraftaufnehmenden Bauteilen der Bremse, z.B. dem Bremssattel, durch Messung von Verformungswegen oder Bauteilspannungen erfolgt.

9. Verfahren nach einem der vorstehenden Ansprüche, **dadurch gekennzeichnet, dass** die Regelung auf der Basis eines Regelsystems für fluidbetätigte Bremsen erfolgt, wobei die Aktuatorstellgröße Druck durch eine andere systemspezifische Stellgröße, insbesondere Aktuatorposition und/oder Motorstrom ersetzt wird.

10. Verfahren nach einem der vorstehenden Ansprüche, **dadurch gekennzeichnet, dass** vor Betätigung des Bremsaktuators das Lüftspiel über die Nachstellvorrichtung überwunden wird, so dass das Lüftspiel bei Beginn der eigentlichen Bremszustellbewegung durch den Bremsaktuator als Fehlerquelle bereits nicht mehr vorhanden ist.

11. Verfahren nach einem der vorstehenden Ansprüche, **dadurch gekennzeichnet, dass** der Einfluss der durch Verschleiß- und Temperaturzustand unterschiedlichen Bremsbelag-Kompression durch Korrekturfaktoren auf die Sollwertvorgaben des Bremssystems kompensiert wird.

12. Verfahren nach einem der vorstehenden Ansprüche, **dadurch gekennzeichnet, dass** für jede Bremse der Verschleißzustand beider Bremsbeläge exakt ermittelt wird und dass durch Auswertung der Energiebilanz der Bremse deren Wärmeinhalt und damit auch die Bremsbelagtemperatur ermittelt, wobei die Auswertung dieser Energiebilanz durch das elektronische Bremssystem oder durch eine Bremsenintegrierte elektronische Steuerung erfolgt.

13. Verfahren nach einem der vorstehenden Ansprüche 7 bis 12, **dadurch gekennzeichnet, dass** bremsenindividuelle Streuungen des Zusammenhanges Spannkraft - Sattelaufweitung durch einen Eichvorgang ausgeglichen werden.

14. Verfahren nach einem der vorstehenden Ansprüche 7 bis 13, **dadurch gekennzeichnet, dass** der Zusammenhang Spannkraft - Motorstrom durch einen Eichvorgang ermittelt und ausgeglichen wird.

15. Verfahren nach Anspruch 14, **dadurch gekennzeichnet, dass** bei dem Eichvorgang auch die Toleranzeinflüsse von Getriebe und Elektromotor für Raumtemperaturbedingungen eliminiert werden.

## Claims

1. Method for controlling a self-energising brake having an electric actuator, in which an activation force applied to the actuator is amplified using a self-energising device arranged between the actuator and brake lining, wherein the actuator is coupled to an open- or closed-loop control device designed to control the actuator in order to adjust thereby the position of the brake lining unit, **characterised in that** the control is based on at least the following parameters:
- Vehicle control variable "deceleration or retardation",
- Actuator control variable "current or actuator position", and
- A - third - control variable designed to compensate braking force differentials due to tolerances among the wheel brakes controlled by the braking system, wherein the third control variable is individually detected for each vehicle wheel and compared to the values detected at the other wheels.

2. Method according to claim 1, **characterised in that**, if there are inadmissible deviations from the prescribed values of the ABS system, the prescribed values (motor current or actuator position) for the individual brakes have a correction factor superimposed individually on them, with which factor the existing braking force differences are compensated.

3. Method according to claim 1 or 2, **characterised in that** the compensation process is carried out in relatively small increments over a plurality of brake application processes.

4. Method according to any of the preceding claims, **characterised in that** the wheel slip of the respective vehicle wheel is used or evaluated as a third control variable.

5. Method according to claim 4, **characterised in that** the wheel slip characteristic variables occurring at the individual wheels are adjusted to a specific predefined set point value of the ABS system.

6. Method according to claim 4 or 5, **characterised in that** the wheel slip characteristic variables of the brakes of the individual axes are adjusted as precisely as possible.

7. Method according to any of the preceding claims, **characterised in that** the tensile force acting on the brake is also determined as a third control variable.

8. Method according to claim 7, **characterised in that** the tensile force on the components of the brake which absorb force, for example the brake caliper, is determined by measuring deformation paths or component stresses.

9. Method according to any of the preceding claims, **characterised in that** the closed-loop control process is carried out on the basis of a closed-loop control system for fluid-actuated brakes, wherein the actuator control variable of pressure is replaced by another system-specific control variable, in particular actuator position and/or motor current.

10. Method according to any of the preceding claims, **characterised in that**, before the brake actuator is activated, the clearance is overcome by means of the adjustment device so that the clearance is already no longer present as a fault source at the start of the actual brake application movement by the brake actuator.

11. Method according to any of the preceding claims, **characterised in that** the influence of the brake lining compression - which differs due to the state of wear and temperature - on the predefined set point values of the brake system is compensated by correction factors.

12. Method according to any of the preceding claims, **characterised in that** the wear state of the two brake linings is determined precisely for each brake, and **in that** by evaluating the energy balance of the brake its thermal content and thus also the brake lining temperature are determined, wherein the evaluation of this energy balance is carried out by the electronic brake system or by means of an electronic controller which is integrated into the brakes.

13. Method according to any of the preceding claims 7 to 12, **characterised in that** brake-specific variations in the relationship between the tensile force and the widening of the caliper are compensated by a calibration process.

14. Method according to any of the preceding claims 7 to 13, **characterised in that** the relationship between the tensile force and the motor current is determined and compensated by a calibration process.

15. Method according to claim 14, **characterised in that** in the calibration process the tolerance effects of the gearbox and electric motor for room temperature conditions are eliminated.

## Revendications

1. Procédé de commande d'un frein auto-assisté par un actionneur électrique, dans lequel on amplifie une force d'actionnement appliquée par l'actionneur à l'aide d'un dispositif auto-assisté disposé entre l'actionneur et la garniture de frein, l'actionneur étant couplé avec un dispositif de commande ou de régulation conçu pour commander l'actionneur afin de régler ainsi la position de l'unité de garniture de frein, **caractérisé en ce qu'**on effectue la régulation au moins sur :
- la grandeur de régulation du véhicule "freinage ou décélération",
- la grandeur de réglage de l'actionneur "courant ou position d'actionneur", et
- une troisième grandeur de régulation, qui est destinée à compenser des différences de force de freinage dues aux tolérances sous les freins de roue régulés par le système de freinage, la troisième grandeur de régulation étant détectée individuellement pour chaque roue du véhicule et étant comparée aux valeurs déterminées sur les autres roues.

2. Procédé suivant la revendication 1, **caractérisé en ce que**, s'il se produit des écarts inadmissibles aux prescriptions du système EBS, on superpose les prescriptions (courant du moteur ou position de l'actionneur) pour les freins individuels individuellement à un facteur de correction, par lequel les différences de force de freinage existantes sont compensées.

3. Procédé suivant la revendication 1 ou 2, **caractérisé en ce qu'**on effectue l'opération de comparaison à des pas assez petits sur plusieurs actionnements de frein.

4. Procédé suivant l'une des revendications précédentes, **caractérisé en ce qu'**on utilise ou on exploite comme troisième grandeur de régulation le glissement de la roue respective du véhicule.

5. Procédé suivant la revendication 4, **caractérisé en ce qu'**on égalise les caractéristiques de glissement de roues se produisant sur les diverses roues à une prescription de valeur de consigne déterminée du système EBS.

6. Procédé suivant la revendication 4 ou 5, **caractérisé en ce qu'**on égalise d'une manière aussi exacte que possible les caractéristiques de glissement de roue des freins des divers essieux.

7. Procédé suivant l'une des revendications précédentes, **caractérisé en ce qu'**on détermine comme troisième grandeur de régulation également la force de serrage agissant sur le frein.

8. Procédé suivant la revendication 7, **caractérisé en ce qu'**on effectue la détermination de la force de serrage sur les éléments constitutifs absorbant une force du frein, par exemple sur l'étrier de frein, en mesurant des trajets de déformation ou des contraintes d'élément constitutif.

9. Procédé suivant l'une des revendications précédentes, **caractérisé en ce qu'**on effectue la régulation sur la base d'un système de régulation pour des freins à actionnement fluidique, la grandeur de réglage de l'actionneur, la pression étant remplacée par une autre grandeur de réglage spécifique au système, notamment par la position de l'actionneur et/ou par le courant du moteur.

10. Procédé suivant l'une des revendications précédentes, **caractérisé en ce qu'**avant l'actionnement de l'actionneur de frein, on surmonte le jeu d'air par le dispositif de rattrapage de jeu de sorte que, au début du mouvement de réglage de frein proprement dit par l'actionneur de frein, le jeu d'air n'est déjà plus présent en tant que source d'erreur.

11. Procédé suivant l'une des revendications précédentes, **caractérisé en ce qu'**on compense l'influence de la différence de compression de la garniture de frein, par l'état d'usure et par la température, par des facteurs de correction sur les prescriptions de valeur de consigne du système de frein.

12. Procédé suivant l'une des revendications précédentes, **caractérisé en ce que**, pour chaque frein, on détermine exactement l'état d'usure des deux garnitures de frein et **en ce que**, en exploitant le bilan énergétique du frein, on en détermine l'enthalpie et ainsi également la température de la garniture de frein, l'exploitation de ce bilan énergétique s'effectuant par le système électronique de freinage ou par une commande électronique intégrée au frein.

13. Procédé suivant l'une des revendications précédentes 7 à 12, **caractérisé en ce qu'**on compense par une opération d'étalonnage des dispersions propres au frein de la relation force de serrage-élargissement de l'étrier.

14. Procédé suivant l'une des revendications précédentes 7 à 13, **caractérisé en ce qu'**on détermine par une opération d'étalonnage la relation force de serrage-élargissement et on la compense.

15. Procédé suivant la revendication 14, **caractérisé en ce que**, dans l'opération d'étalonnage, on élimine aussi les influences de tolérance de transmissions et au moteur électrique pour des conditions de température ambiante.
